# EUROPÄISCHE PATENTSCHRIFT

(11) **EP 0 857 284 B1**
(45) Veröffentlichungstag und Bekanntmachung des Hinweises auf die Patenterteilung: **03.09.2003**
(21) Anmeldenummer: 96938965.9
(22) Anmeldetag: 16.10.1996
(51) Int. Cl.: F24F 3/16

(54) **VERFAHREN UND VORRICHTUNG ZUR VERSORGUNG VON EINEM ODER MEHREREN RÄUMEN EINES GEBÄUDES MIT EINEM ERHÖHTEN SAUERSTOFFANGEBOT**
PROCESS FOR PROVIDING ONE OR A PLURALITY OF ROOMS WITH AN INCREASED OXYGEN SUPPLY
PROCEDE POUR FOURNIR A UNE OU PLUSIEURS PIECES D'UN BATIMENT UNE PLUS GRANDE QUANTITE D'OXYGENE

(30) Priorität: 23.10.1995 DE 19539314; 30.11.1995 DE 19544680
(43) Veröffentlichungstag der Anmeldung: 12.08.1998
(73) Patentinhaber: Huf, Hans-Joachim, Dr., 55130 Mainz (DE)
(72) Erfinder: Huf, Hans-Joachim, Dr., 55130 Mainz (DE)
(74) Vertreter: Kampfenkel, Klaus, Dipl.-Ing.
(86) Internationale Anmeldenummer: DE9601976
(87) Internationale Veröffentlichungsnummer: WO97015791

(56) Entgegenhaltungen:
- FR-A- 2 660 548
- US-A- 3 910 778
- US-A- 4 983 190
- PATENT ABSTRACTS OF JAPAN vol. 016, no. 137 (M-1231), 7.April 1992 & JP 03 295982 A (MATSUSHITA ELECTRIC IND CO LTD), 26.Dezember 1991,
- PATENT ABSTRACTS OF JAPAN vol. 018, no. 380 (M-1639), 18.Juli 1994 & JP 06 101864 A (HITACHI LTD), 12.April 1994,
- PATENT ABSTRACTS OF JAPAN vol. 013, no. 161 (M-815), 18.April 1989 & JP 63 318434 A (MATSUSHITA ELECTRIC IND CO LTD), 27.Dezember 1988,

## Beschreibung

Die Erfindung betrifft ein Verfahren zur Versorgung von einem oder mehreren Räumen eines Gebäudes mit einem erhöhten Sauerstoffangebot gemäß dem Oberbegriff des Anspruchs 1 und eine Vorrichtung gemäß Anspruch 9.

Es ist bekannt, daß der Mensch in den letzten Jahren immer stärker antropogenen Substanzen ausgesetzt ist. Eine durch diese Substanzen hervorgerufene Belastung äußert sich durch gehäuftes Auftreten von Allergien und anderen Krankheitssymptomen. Die Substanzen werden über die Haut durch direkten Körperkontakt, durch Essen und Trinken und zum erheblichen Anteil auch durch Einatmen aus der Luft aufgenommen. Auf die Gesundheitsrisiken der Luftverschmutzung allgemein und den positiven Einfluß von reiner, sauberer Luft, z. B. in Luftkurorten, wird hierbei nicht näher eingegangen, da dieser Sachverhalt als allgemein bekannt und gesichert vorausgesetzt wird.

Alle Funktionen im Körper können nur dann normal ablaufen, wenn den Körperzellen über das Blut genügend Sauerstoff (O₂) zur Verfügung gestellt wird. Über die Lunge nimmt das Hämoglobin des Blutes den Sauerstoff aus der eingeatmeten Luft auf. Je besser die Sauerstoffaufnahme ist, desto leistungsfähiger wird der Organismus, und desto wohler fühlt sich der Mensch. Als Beispiel hierzu sei das Höhentraining der Leistungssportler genannt, das letztendlich dazu dient, den Körperzellen bei starker Belastung genügend Sauerstoff zur Verfügung zu stellen.

Aus der Zusammensetzung der atmosphärischen Luft ergibt sich, daß der Mensch mit jedem Atemzug nur etwa 20% reinen Sauerstoff und im Gegensatz dazu aber fast 80% Stickstoff (N₂) aufnimmt, wobei der Stickstoff vom Organismus nicht verwertet wird.

Die Gewinnung von Sauerstoff aus der Luft ist seit langem bekannt.
So wird Luft nach dem sogenannten Linde-Verfahren verflüssigt und anschließend fraktioniert destilliert, wobei man Sauerstoff und Stickstoff bei ca. Minus 200°C erhält. Oder man gewinnt Sauerstoff auf chemischem Weg aus Bariumoxid (BaO) oder aus Kohlendioxid (CO₂) oder durch Elektrolyse von Wasser(H₂O).
Mitte der 80er Jahre wurde die Hohlfasermembrantechnik entwickelt, die es gestattet, den Stickstoff relativ preiswert aus der Luft abzutrennen. Hierbei wird das physikalische Phänomen ausgenutzt, daß die verschiedenen Gase der Luft mit unterschiedlichen Geschwindigkeiten durch eine Membran diffundieren. Als Membrane dienen Millionen von gebündelten Hohlfasern von der Stärke eines menschlichen Haares.

Bekannt ist auch die Molekularsiebtechnologie, bei der zur Sauerstoffanreicherung die Luft abwechselnd in zwei Adsorptionsbehältern mit künstlichen Molekularsieben eingebracht wird, die im Druckwechselverfahren Stickstoff und Kohlenwasserstoff adsorbieren und desorbieren.

Verfahren zum Anbieten einer erhöhten Sauerstoffkonzentration sind bekannt und medizinisch unbestritten. So wird bei akuten Erkrankungen dem Patienten Sauerstoff z. B. über ein Sauerstoffzelt oder über Schlauchverbindungen zur Nase zum Atmen angeboten. Auch nicht bettlägerige Patienten werden aus therapeutischen Zwecken mit einem erhöhtem Sauerstoffangebot versorgt. Dazu werden Schläuche, die über eine Maske oder auch direkt die Nase versorgen, an kleine Sauerstoffdruckflaschen angeschlossen, die die Patienten mit sich tragen. Auch wurden Versuche mit Sauerstoff-Druckkammern, in denen die Probanden bestimmte Zeiten verbringen mußten, angestellt.

Doch nicht nur bei Kranken wird versucht, durch ein erhöhtes Sauerstoff-Angebot ihr Wohlbefinden zu steigern, sondern auch bei Gesunden. So gibt es schon weltweit sogenannte Sauerstoff-Bars, in denen die Besucher außer dem üblichen Angebot von Bars auch aus einer Maske Sauerstoff einatmen können.

Bei den meisten oben aufgeführten Verfahren, dem Menschen ein erhöhtes Sauerstoffangebot anzubieten, bekommt der Proband den Sauerstoff über eine Maske oder direkt über Schlauchverbindungen zur Nase zum Einatmen angeboten. Für den Probanden sind diese Verfahren daher sehr unbequem und mit erheblichen Aufwendungen und Entbehrungen verknüpft, und zwar insbesondere deswegen, weil während der Sauerstoffaufnahme die Bewegungsfreiheit sehr eingeschränkt wird.

JP-A-61 01 864 beschreibt ein Verfahren mit den Merkmalen a) bis c) von Anspruch 1.

Der Erfindung liegt daher die Aufgabe zugrunde ein kostengünstiges Verfahren bereitzustellen, mit dem eine für den Probanden bequeme Versorgung mit einem erhöhtem Sauerstoffangebot, bei gleichzeitig möglichst großer Bewegungsfreiheit und der Möglichkeit leistungssteigernde und/oder rekonvaleszierende Übungen auszuführen, gewährleistet wird.

Dieses Problem löst die Erfindung mit den Merkmalen des Anspruchs 1, bzw. des Anspruchs 9.

Dazu wird sauerstoffangereicherte Luft bereitgestellt, mit der Räume geflutet werden, in denen Probanden der so erzeugten Atmosphäre ausgesetzt werden.

Weiterbildungen der Erfindung sind Gegenstand der Unteransprüche. So kann die Herstellung sauerstoffangereicherter Luft mittels der Membrantechnologie erfolgen, bei der komprimierte und erwärmte Luft durch eine Hohlfasermembran gepreßt und der Stickstoff aus der Luft abgetrennt wird.

Von Vorteil ist, daß dieses System der Hohlfasermembrantechnik absolut wartungsfrei ist, denn es weist keine beweglichen Teile auf. Auch sind die Sauerstoffausbeuten und -mengen bei dieser Technik vom angewandten Druck und der Temperatur abhängig und können somit den jeweiligen Bedürfnissen angepasst werden. Von Vorteil ist auch, daß die sauerstoffangereicherte Luft durch die Diffusion durch die Membran absolut staubfrei und frei von irgendwelchen Keimen ist.
Das Verfahren erweist sich außerdem als kostengünstig, denn es wird nicht nur der gewonnene Sauerstoff genutzt, sondern auch der anfallende Stickstoff kann auf anderen Einsatzgebieten, z. B. als Inert- oder Schutzgas eingesetzt werden. Entsprechendes gilt auch für den Einsatz der Molekularsiebtechnologie.

Ein weiterer Vorteil der Erfindung ist, daß Probanden, die diesem Verfahren ausgesetzt werden, gleichzeitig leistungssteigernde und/oder rekonvaleszierende Übungen ausführen können.

Gemäß des Erfindund wird verbrauchte Luft wieder aufbereitet und kann zur Herstellung der sauerstoffangereicherten Luft verwendet werden, um so einen kostengünstigen Kreislauf bereitzustellen.
Außerdem kann die sauerstoffangereicherte Luft durch Bestrahlen mit ultraviolettem Licht einer Wellenlänge, die nicht zur Bildung von Ozon führt, mit angeregtem Sauerstoff gemischt werden. Es ist bekannt, daß angeregter Sauerstoff biologisch noch wirksamer als normaler Sauerstoff ist. Die Ultraviolettbestrahlung kann durch unter der Decke des Raumes aufgehängte Strahler erfolgen.

Die Erfindung wird nachfolgend anhand eines Ausführungsbeispiels in Verbindung mit den Zeichnungen näher erläutert. Es zeigen:
- Fig. 1: ein Blockdiagramm des erfindungsgemäßen Verfahrens unter Einsatz der Hohlfasermembrantechnik mit geschlossenem Kreislauf;
- Fig. 2: schematisch das Wirkungsprinzip der Membrantechnik;
- Fig. 3: den Querschnitt eines Gebäudes, dessen Räume mit Sauerstoff angereicherter Luft geflutet werden können, und
- Fig. 4: den Grundriß des oberen Stockwerks gemäß Fig. 3.

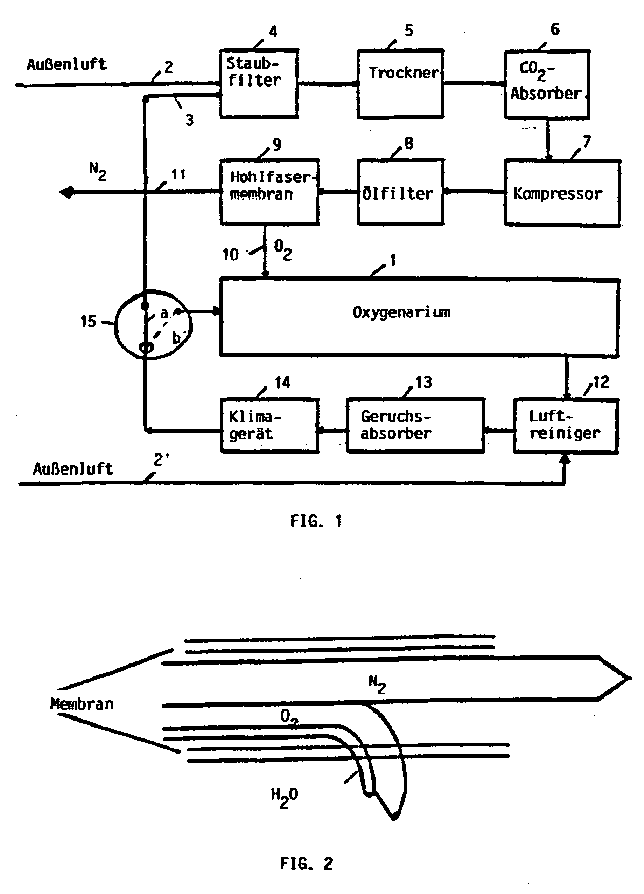

Nachfolgend wird auf Fig. 1 in Verbindung mit Fig. 2 Bezug genommen; dargestellt wird eine Ausführungsform eines Kreislaufs zur Herstellung sauerstoffangereicheter Luft 10 und zur Versorgung eines oder mehrerer Räume in einem Gebäude 1, einem sogenannten Oxygenarium, mit dieser Luft. Dazu passiert die Luft, die sich aus atmosphärischer (2) und wiederaufbereiteter (3) Luft zusammensetzt, ein Staubfilter 4, das Partikel aus der Luft abfängt. Mit einem daran angeschlossenen Trockner 5 kann die vorfiltrierte Luft je nach gewünschter Luftfeuchtigkeit getrocknet werden. Anschließend wird das Kohlendioxid der Luft mit einem Absorber 6 auf bekannte Weise entzogen. Die Ausbeute und Menge an Sauerstoff nach einem Diffundieren durch eine Hohlfasermembraneinrichtung 9 ist vom angewandten Druck und der Temperatur abhängig. Deshalb passiert die Luft vor Eintritt in die Membraneinrichtung 9 zunächst einen Kompressor 7 und im Anschluß ein Ölfilter 8, um die Membran nicht unnötig durch Öl aus dem Kompressor 7 zu belasten. Als Membran in der Einrichtung 9 dienen Millionen von gebündelten Hohlfasern von der Stärke eines menschlichen Haares. Unter Ausnutzung des physikalischen Phänomens, das die verschiedenen Gase der Luft mit unterschiedlichen Geschwindigkeiten durch eine Membran diffundieren, wird die im Kompressor 7 verdichtete Luft durch die Fasern der Membran 9 gepreßt, wobei die schnellen Gase Sauerstoff (O₂) und Wasserdampf (H₂O-Dampf) (Kohlendioxid wird der Luft bereits im Absorber 6 entzogen) schneller durch die Membran 9 diffundieren als der relativ langsame Stickstoff (N2).

Dieses Wirkungsprinzip ist schematisch in Fig.2 dargestellt. Das System unter Verwendung der Kapillartechnik weist keine beweglichen Teile auf und ist dadurch wartungsfrei.
Wird die Luft z.B. mit einem Druck von 12 Bar und einer Temperatur von 20°C durch die Fasern der Membran 9 gepreßt, erhält man ca. 40 % Sauerstoff im sogenannten Permeat, dem Endprodukt der Membraneinrichtung 9. Diese sauerstoffreiche Luft 10 ist wegen der Diffusion durch die Membran, absolut staubfrei und frei von irgendwelchen Keimen.

Der bei diesem Verfahren anfallende Stickstoff 11 kann in anderen Einsatzgebieten z. B als Inertgas zum Begasen von Getreide, oder als Schutzgas für oxydationsanfällige Gase zur Anwendung kommen. Genauso entsteht auch bei der bekannten Herstellung von Stickstoff mit dem Verfahren der Hohlfasermembrantechnik das Abfallprodukt Sauerstoff, das dann in umgekehrter Weise für das erfindungsgemäße Verfahren weiterverwendet werden kann.

Über einen Umschalter 15, der lediglich zur Verdeutlichung als elektrischer Schalter dargestellt ist und in Wirklichkeit aus einem umschaltbaren Ventil besteht, kann die Sauerstoffherstellung und -konzentration reguliert werden.
So befindet sich, um möglichst wenig Sauerstoff herstellen zu müssen und damit Kosten durch eine weniger aufwendige Membraneinrichtung 9 zu sparen, Umschalter 15 in Schalterstellung a, so daß dem Oxygenarium 1 ein Teil der verbrauchten Luft über einen Luftreiniger 12, einen Geruchsabsorbierer 13 und ein Klimagerät 14 wieder aufbereitet dem Staubfilter 4 unter Bildung eines Kreislaufs zugeführt wird.
Um einer zu hohen Sauerstoff-Anreicherung im Oxygenarium 1 entgegenzuwirken befindet sich der Umschalter 15 in Schalterstellung b, so daß dem Oxygenarium 1 direkt, bei Umgehung der Fasermembran 9, die oben beschriebene aufbereitete Luft zugeführt wird.
Dem Luftreiniger 12 wird zusätzlich zur verbrauchten Luft aus dem Oxygenarium unverbrauchte Außenluft 2' zugeführt. Daher muß der Luftreiniger 12 von einer sehr guten Qualität sein, denn in Schalterstellung b des Umschalters 15 entfällt die Filterwirkung durch die Hohlfaser. Eine entsprechende Filterwirkung kann aber auch mit einem zusätzlichen Filter (nicht gezeigt) zwischen dem Umschalter 15 und dem Oxygenarium 1 erzielt werden.

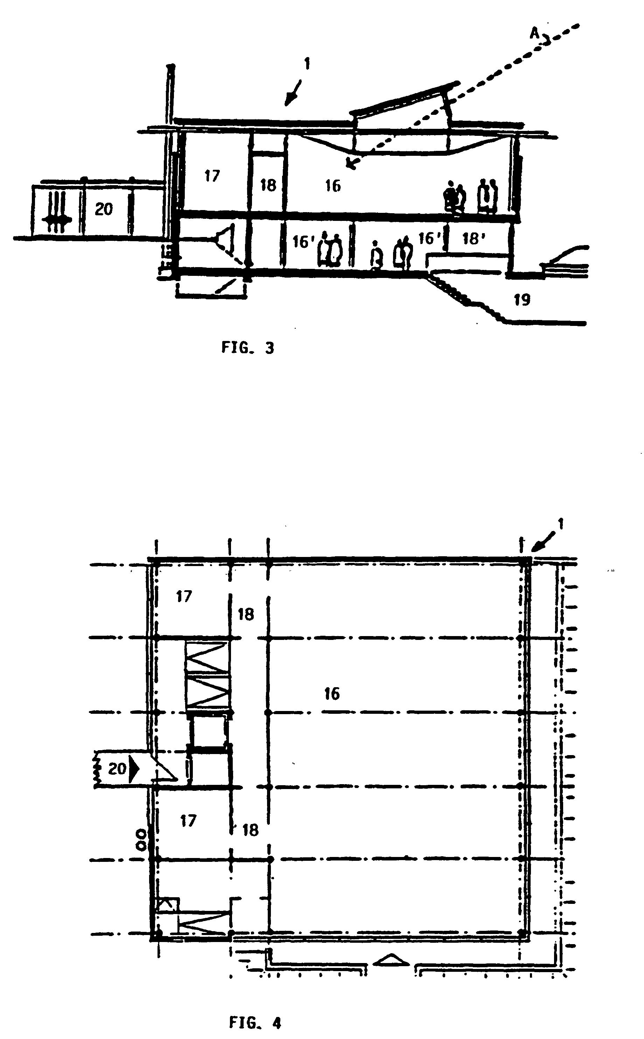

Mit der sauerstoffreichen Luft 10 werden Räume des Oxygenariums 1 geflutet. Fig. 3 und Fig. 4 zeigen einen Querschnitt bzw. einen Grundriß des Oxygenariums 1, in dem eine große Halle 16 und eventuell mehrere kleine Räume 16' mit der sauerstoffreichen, sauberen Luft geflutet werden können. In der lichtdurchfluteten (Pfeil A) und damit angenehm hellen Halle 16 können Probanden der unterschiedlichsten Indikationsgruppen, z. B. zur Hyperoxidation bei Lungenleiden, bei Asthma, bei Allergikern, nach einer Krebstherapie und ähnlichem, dieser Atmosphäre ausgesetzt werden, wobei in den je nach Anwendungszweck gleichzeitig leistungssteigernde und/oder rekonvaleszierende Übungen ausgeführt werden können. Ein derartiges Oxygenarium 1 bietet genügend Platz, um in weiteren Räumen 16' zusätzliche Therapien und die damit verbundene Betreuung der Probanden anzubieten. Das Oxygenarium 1 kann aber auch gesunden Menschen zur Steigerung des Wohlbefinden dienen.

Die technischen Einrichtungen gemäß Fig. 1 sind in Geräteräumen 17 im Oxygenarium 1 untergebracht, können aber auch in einem vom Oxygenarium getrennten Raum aufgestellt werden. Das hat den Vorteil, daß die technischen Einrichtungen nicht in der Nähe sauerstoffangereichterter Luft und den damit verbundenen, erhöhten Brandgefahren arbeiten müssen.

Die sauerstoffgeflutete Halle 16, gegebenenfalls mit ihren Räumen 16', muß gegen die Außenluft möglichst gut abgedichtet sein, um Sauerstoffverluste zu vermeiden. Außerdem soll ein geringer Überdruck im Oxygenarium herrschen, damit von außen keine Fremdstoffe einschließlich von Gasen eindringen können. Wegen des Überdrucks und zur Vermeidung von Sauerstoffverlusten erfolgt der Zugang zur Halle 16 über Schleusen 18 mit wenigstens zwei Türen, die nur wechselweise geöffnet werden können. Statt dessen kann auch eine Drehtür verwendet werden, die durch Wandunterteilungen keine direkte Verbindung zwischen außen und innen zuläßt. Natürlich können mehrere Schleusen vorgesehen werden, wenn weitere Zugänge erwünscht sind. Beispielsweise kann eine weitere Schleuse 18' als Vorraum eines Tunnels 19 zu einem anderen Gebäude eingebaut sein, wenn auch die Räume 16' sauerstoffgeflutet sind. Es besteht aber auch die Möglichkeit, das ganze Gebäude mit Sauerstoff zu fluten. Dann kann eine Schleuse (nicht dargestellt) im Eingangsbereich 20 vorgesehen sein.

Leicht entzündbare und brennbare Teile sollten im Oxygenarium möglichst vermieden werden und das Oxygenarium soll entzündungs- und flammhemmend ausgerüstet sein.

Bei dem in Fig. 1 dargestellten Verfahren kann anstelle einer Hohlfasermembran 9 auch eine PSA-Anlage verwendet werden, wobei der Kohlendioxid-Absorber 6 entfällt. Dabei wird die komprimierte Luft abwechselnd in zwei Adsorptionsbehälter eingebracht. Künstliche Molekularsiebe (Zeolithe) absorbieren und desorbieren im Druckwechselverfahren Stickstoff und Kohlenwasserstoffe. Die Regeneration, also die Desorption des adsorbierten Gasgemisches, erfolgt durch wechselweise Evakuierung der Adsorptionsbehälter. Der kontiniuierliche Sauerstoffzufluß in einen Sauerstoffspeicher garantiert die konstante Verfügbarkeit von konzentriertem Sauerstoff mit einer Reinheit von etwa 92 Vol.%.

## Patentansprüche

1. Verfahren zur Versorgung von einem oder mehreren Räumen eines Gebäudes mit einem erhöhten Sauerstoffangebot, mit den Verfahrensschritten:
a) es wird sauerstoffangereicherte Laft (10) hergestellt;
b) der oder die Räume (16,16') werden mit der sauerstoffangereicherten Luft geflutet;
c) verbrauchte Luft wieder aufbereitet und zur Herstellung der sauerstoffangereicherten Luft verwendet wird,
**dadurch gekennzeichnet, daß**
d)die Sauerstoffkonzentration mit in den einem oder mehreren Räumen (16, 16') mit einem Umschalter (15) geregelt werden kann, wobei den einem oder mehreren Räumen (16, 16') ein Teil der verbrauchten sauerstoffangereicherten Luft wiederaufbereitet unter Bildung eines Kreislaufs zugeführt wird.

2. Verfahren nach Anspruch 1,
**dadurch gekennzeichnet, daß** die Herstellung sauerstoffangereicherter Luft mittels der Membrantechnologie erfolgt, bei der komprimierte und erwärmte Luft durch eine Hohlfasermembran (9) gepreßt und der Stickstoff aus der Luft abgetrennt wird.

3. Verfahren nach Anspruch 1,
**dadurch gekennzeichnet, daß** die Sauerstoffanreicherung von Luft mittels der Molekularsiebtechnologie erfolgt, bei der die Luft abwechselnd in zwei Adsorptionsbehälter mit künstlichen Molekularsieben eingebracht wird, die im Druckwechselverfahren Stickstoff und Kohlenwasserstoff adsorbieren und desorbieren.

4. Verfahren nach einem der Ansprüche 1 bis 3 **gekennzeichnet durch** die Verfahrensschritte:
a) Filtern von Luft zur Beseitigung von Staub, Insekten und dergleichen,
b) Trocknen der gefilterten Luft, Entfernen von CO₂ **durch** Absorbtion,
c) Komprimieren der Luft in einem Kompressor,
d) Filtern der komprimierten Luft zur Beseitigung von Ölrückständen aus dem Kompressor,
e) Anreichern von O₂ mittels einer Hohlfasermembran oder mittels der Molekularsiebtechnologie,
f) Zuführen der sauerstoffangereicherten Luft in den Raum bzw. in die Räume.

5. Verfahren nach Anspruch 4,
**gekennzeichnet durch** die Verfahrensschritte:
g) Abführen von Luft aus dem bzw. den Räumen über einen Luftreiniger,
h) Beimischen von Außenluft zur abgeführten Luft über einen Luftreiniger.

6. Verfahren nach Anspruch 5,
**gekennzeichnet durch** den Verfahrensschritt:
i) Verwenden der gereinigten Luft über einen Geruchsabsorber und ein Klimagerät beim Schritt 4.a).

7. Verfahren nach Anspruch 5,
**gekennzeichnet durch** den Verfahrensschritt:
k) Verwenden der gereinigten Luft über einen Geruchsabsorber und ein Klimagerät beim Schritt 4.f).

8. Verfahren nach einem der Ansprüche 1 bis 7,
**dadurch gekennzeichnet, daß** die sauerstoffangereicherte Luft durch Bestrahlen mit ultraviolettem Licht einer Wellenlänge, die nicht zur Bildung von Ozon führt, mit angeregtem Sauerstoff gemischt wird.

9. Vorrichtung zur Versorgung eines oder mehrerer Räume eines Gebäudes mit sauerstoffangereicherter Luft, insbesondere zur Durchführung eines Verfahrens nach einem der Ansprüche 1 bis 8,
umfassend
eine Einrichtung (9) zur Herstellung von sauerstoffangereicherter Luft,
eine Einrichtung zum Fluten des bzw. der Räume (16, 16') mit der sauersoffangereicherten Luft, und
einen Umschalter (15), mit dem die Sauerstoffkonzentration geregelt werden kann, wobei der Vorrichtung ein Teil der verbrauchten Luft unter Bildung eines Kreislaufs zugeführt wird.

10. Vorrichtung nach Anspruch 9,
**dadurch gekennzeichnet, daß** die Einrichtung zur Herstellung von sauerstoffangereicherter Luft eine Hohlfasermembraneinrichtung zum Abtrennen von Stickstoff aus der Luft umfaßt.

11. Vorrichtung nach Anspruch 9,
**dadurch gekennzeichnet, daß** die Einrichtung zur Herstellung von sauerstoffangereicherter Luft eine Molekularsiebeinrichtung zur Adsorption von Stickstoff und Kohlenwasserstoff umfaßt.

12. Vorrichtung nach einem der Ansprüche 9 bis 11, **gekennzeichnet durch**
eine Einrichtung (12, 13, 14) zum Abführen und Wiederaufbereiten wenigstens eines Teils von der Luft aus dem bzw. den Räumen.

13. Vorrichtung nach Anspruch 12,
**dadurch gekennzeichnet, daß** die wiederaufbereitete Luft zur Herstellung der sauerstoffangereicherten Luft verwendbar ist.

14. Vorrichtung nach Anspruch 12,
**dadurch gekennzeichnet, daß** die wiederaufbereitete Luft dem bzw. den Räumen direkt zuführbar ist.

15. Vorrichtung nach einem der Ansprüche 9 bis 14, **gekennzeichnet durch** eine Einrichtung zum Mischen der sauerstoffangereicherten Luft mit angeregtem Sauerstoff.

## Claims

1. A process for supplying one or more rooms of a building with an increased oxygen supply,
with the process steps:
a) oxygen-enriched air (10) is produced;
b) the room or rooms (16, 16') are flooded with the oxygen-enriched air;
c) used air is re-processed and is used to produce the oxygen-enriched air,
**characterised in that**
d) the oxygen concentration can be controlled in the one or more rooms (16, 16') with a changeover switch (15), some of the used oxygen-enriched air being supplied to the one or more rooms (16, 16') re-processed with the formation of a circuit.

2. A process according to claim 1, **characterised in that** the production of oxygen-enriched air is effected by membrane technology, in which compressed and heated air is pressed through a hollow fibre membrane (9) and the nitrogen is separated from the air.

3. A process according to claim 1, **characterised in that** the oxygen enrichment of air is effected by means of molecular sieve technology, in which the air is alternately introduced into two adsorption tanks with artificial molecular sieves which adsorb and desorb nitrogen and hydrocarbon in the pressure change process.

4. A process according to any one of claims 1 to 3, **characterised by** the process steps:
a) filtration of air to eliminate dust, insects and the like,
b) drying of the filtered air, removal of CO₂ by absorption,
c) compression of the air in a compressor,
d) filtration of the compressed air to eliminate oil residues from the compressor,
e) enrichment of O₂ by means of a hollow fibre membrane or by molecular sieve technology,
f) supply of the oxygen-enriched air into the room or rooms.

5. A process according to claim 4, **characterised by** the process steps:
g) discharge of air from the room or rooms via an air cleaner,
h) addition of external air to the discharged air via an air cleaner.

6. A process according to claim 5, **characterised by** the process step:
i) use of the cleaned air via an odour absorber and an air-conditioning unit in step 4.a).

7. A process according to claim 5, **characterised by** the process step:
k) use of the cleaned air via an odour absorber and an air-conditioning unit in step 4.f).

8. A process according to any one of claims 1 to 7, **characterised in that** the oxygen-enriched air is mixed with excited oxygen by irradiation with ultraviolet length of a wavelength which does not result in the formation of ozone.

9. Apparatus for supplying one or more rooms of a building with oxygen-enriched air, particularly for performing a process according to any one of claims 1 to 8, comprising:
a device (9) for producing oxygen-enriched air,
a device for flooding the room or rooms (16, 16') with the oxygen-enriched air, and
a changeover switch (15) by means of which the oxygen concentration can be controlled, some of the used air being fed to the apparatus with the formation of a circuit.

10. Apparatus according to claim 9, **characterised in that** the device for producing oxygen-enriched air comprises a hollow fibre membrane device for separating nitrogen from the air.

11. Apparatus according to claim 9, **characterised in that** the device for producing oxygen-enriched air comprises a molecular sieve device for the adsorption of nitrogen and hydrocarbon.

12. Apparatus according to any one of claims 9 to 11, **characterised in** by
a device (12, 13, 14) for discharging and reprocessing at least a part of the air from the room or rooms.

13. Apparatus according to claim 12, **characterised in that** the re-processed air is usable for the production of the oxygen-enriched air.

14. Apparatus according to claim 12, **characterised in that** the re-processed air can be supplied directly to the room or rooms.

15. Apparatus according to any one of claims 9 to 14, **characterised by** a device for mixing the oxygen-enriched air with excited oxygen.

## Revendications

1. Procédé destiné à l'alimentation d'un ou de plusieurs locaux d'un bâtiment avec un apport accru en oxygène,
comportant les phases de procédé :
a) il est produit de l'air enrichi en oxygène (10) ;
b) le ou les locaux (16, 16') sont remplis avec l'air enrichi en oxygène ;
c) de l'air vicié est retraité et utilisé pour la production de l'air enrichi en oxygène ;
**caractérisé en ce que**
d) la concentration en oxygène dans un ou plusieurs locaux (16, 16') peut être réglée avec un commutateur (15), une partie de l'air enrichi en oxygène et usé étant amenée à l'un ou à plusieurs locaux (16, 16') pour retraitement avec formation d'un circuit.

2. Procédé selon la revendication 1,
**caractérisé en ce que** la production d'air enrichi en oxygène est effectuée au moyen de la technologie à membrane, d'après laquelle de l'air comprimé et réchauffé est pressé à travers une membrane (9) à fibres creuses, et l'azote est séparé de l'air.

3. Procédé selon la revendication 1,
**caractérisé en ce que** l'enrichissement en oxygène de l'air est effectué au moyen de la technologie à tamis moléculaires, d'après laquelle l'air est introduit en alternance dans deux récipients d'adsorption comportant des tamis moléculaires artificiels, qui adsorbent et désorbent de l'azote et des hydrocarbures par un procédé d'alternance de pression.

4. Procédé selon l'une quelconque des revendications 1 à 3,
**caractérisé par** les phases de procédé :
a) filtration d'air pour l'élimination de poussière, d'insectes et analogues ;
b) séchage de l'air filtré, élimination de CO₂ par absorption ;
c) compression de l'air dans un compresseur ;
d) filtration de l'air comprimé pour l'élimination de résidus d'huile provenant du compresseur ;
e) enrichissement en O₂ au moyen dune membrane à fibres creuses ou au moyen de la technologie à tamis moléculaires ;
f) introduction de l'air enrichi en oxygène dans le local ou les locaux.

5. Procédé selon la revendication 4,
**caractérisé par** les phases de procédé :
g) évacuation d'air du ou des locaux par l'intermédiaire d'un épurateur d'air ;
h) ajout d'air extérieur à l'air évacué par l'intermédiaire d'un épurateur d'air.

6. Procédé selon la revendication 5,
**caractérisé par** la phase de procédé :
i) utilisation de l'air épuré par l'intermédiaire d'un absorbeur d'odeur et d'un climatiseur dans la phase 4.a).

7. Procédé selon la revendication 5,
**caractérisé par** la phase de procédé :
k) utilisation de l'air épuré par l'intermédiaire d'un absorbeur d'odeur et d'un climatiseur dans la phase 4.f).

8. Procédé selon l'une quelconque des revendications 1 à 7,
**caractérisé en ce que** l'air enrichi en oxygène est mélangé avec de l'oxygène activé par un rayonnement avec de la lumière ultraviolette d'une longueur d'onde qui ne conduit pas à la génération d'ozone.

9. Dispositif destiné à l'alimentation d'un ou de plusieurs locaux d'un bâtiment avec de l'air enrichi en oxygène, destiné notamment à la mise en oeuvre d'un procédé selon l'une quelconque des revendications 1 à 8, comportant
un dispositif (9) pour la production d'air enrichi en oxygène,
un dispositif pour le remplissage du ou des locaux (16, 16') avec l'air enrichi en oxygène, et
un commutateur (15) avec lequel la concentration en oxygène peut être réglée, une partie de l'air vicié étant amenée au dispositif en formant un circuit.

10. Dispositif selon la revendication 9,
**caractérisé en ce que** le dispositif pour la production d'air enrichi en oxygène comporte un dispositif à membrane à fibres creuses pour séparer l'azote de l'air.

11. Dispositif selon la revendication 9,
**caractérisé en ce que** le dispositif pour la production d'air enrichi en oxygène comporte un dispositif à tamis moléculaires pour l'adsorption d'azote et d'hydrocarbures.

12. Dispositif selon l'une quelconque des revendications 9 à 11,
**caractérisé par** un dispositif (12, 13, 14) pour l'évacuation et le retraitement d'au moins une partie de l'air provenant du ou des locaux.

13. Dispositif selon la revendication 12,
**caractérisé en ce que** l'air retraité peut être utilisé pour la production d'air enrichi en oxygène.

14. Dispositif selon la revendication 12,
**caractérisé en ce que** l'air retraité peut être amené directement au ou aux locaux.

15. Dispositif selon l'une quelconque des revendications 9 à 14,
**caractérisé par** un dispositif pour le mélange de l'air enrichi en oxygène avec de l'oxygène activé.
